# EUROPEAN PATENT APPLICATION

(11) **EP 4 571 960 A1**
(43) Date of publication of application: **18.06.2025**
(21) Application number: 24214509.2
(22) Date of filing: 21.11.2024
(51) Int. Cl.: H01M 50/147, H01M 50/342

(54) **CAP ASSEMBLY, BATTERY CELL, AND BATTERY**

(30) Priority: 14.12.2023 CN 202323435859 U; 21.08.2024 WO PCT/CN2024/113576
(71) Applicant: Eve Energy Co., Ltd., Huizhou, Guangdong 516006 (CN)
(72) Inventor: LI, Jidong, Guangdong, 516006 (CN); FU, Zhibo, Guangdong, 516006 (CN); WANG, Xingjian, Guangdong, 516006 (CN); SONG, Pengyuan, Guangdong, 516006 (CN)
(74) Representative: Berggren Oy

(57) **Abstract**

The present disclosure provides a cap assembly (001), a battery cell, and a battery. The cap assembly (001) includes a cap (012). The cap (012) includes a lid (121) and an explosion-proof piece (122). The lid (121) has a first side surface and a second side surface arranged oppositely. The explosion-proof piece (122) is partially attached to the first side surface and is provided with an edge portion (1222) at a periphery of the explosion-proof piece (122). The edge portion (1222) is provided on the periphery of the lid (121), and a plane where a top surface of the edge portion (1222) is located does not exceed a plane where the second side surface is located.

## Description

### TECHNICAL FIELD

The present disclosure relates to the technical field of batteries, and in particular, to a cap assembly, a battery cell, and a battery.

### BACKGROUND

In related arts, a main structure of a battery cell includes a steel shell, a cap, and an electrode assembly. The cap and the steel shell cover each other to define an installation cavity, and the electrode assembly is arranged in the installation cavity. A negative tab of the electrode assembly is electrically connected to the shell, making the shell negatively charged. A positive electrode of the electrode assembly is electrically connected to the cap, so that the cap is positively charged. There is a sealing ring between the steel shell and the cap. In order to improve the sealing performance, parts of the steel shell on both sides of the sealing ring need to be rolled to form a buckle edge and a rolling groove on the steel shell. The buckle edge is formed at an end of the steel shell and wraps the periphery of the sealing ring. The rolling groove is formed on the steel shell, is located on one side of the sealing ring facing away from the buckling edge, and squeezes the sealing ring.

Currently, a length of a flat section of the negatively charged buckle edge is small, resulting in poor operability and poor electrical connection stability between the flat section of the buckle edge and related components.

### SUMMARY

Embodiments of the present disclosure provide a cap assembly, a battery cell, and a battery. The cap assembly, the battery cell, and the battery can improve the operability and electrical connection stability of the electrical connection between the flat section of the buckle edge and related components.

In a first aspect, embodiments of the present disclosure provide a cap assembly. The cap assembly includes a cap. The cap includes a lid and an explosion-proof piece. The lid has a first side surface and a second side surface arranged oppositely. The explosion-proof piece is partially attached to the first side surface and is provided with an edge portion at a periphery of the explosion-proof piece. The edge portion is provided on the periphery of the lid, and a plane where a top surface of the edge portion is located does not exceed a plane where the second side surface is located.

In a second aspect, embodiments of the present disclosure provide a battery cell. The battery cell includes a steel shell, an electrode assembly, and the aforementioned cap assembly. The steel shell has an opening. The electrode assembly is arranged in the steel shell. The cap assembly blocks the opening. An end of the steel shell close to the opening is provided with a buckle edge, and the buckle edge includes a flat section. The flat section is located on one side of the lid away from the explosion-proof piece, and the flat section is perpendicular to an axis of the explosion-proof piece.

In a third aspect, embodiments of the present disclosure further provide a battery. The battery includes a plurality of the aforementioned battery cells, and the plurality of battery cells are connected in series or in parallel.

Beneficial effects of the embodiments of the present disclosure:
In the embodiments of the present disclosure, by limiting that the plane where the edge portion of the explosion-proof piece is located does not exceed the plane where the second side is located, the cap is provided with a structure without a wrapping edge, thereby reducing a peripheral height of the cap and reducing a total peripheral height of the cap assembly. As a result, a height dimension of the steel shell that matches the cap assembly may be reduced, so that the reduced dimension of this part may be increased to the length of the flat section of the buckle edge, thereby increasing an electrical connection area between the flat section of the buckle edge and the relevant components, and ultimately improving the operability and electrical connection stability of the electrical connection between the flat section of the buckle edge and related components.

### BRIEF DESCRIPTION OF THE DRAWINGS

In order to more clearly illustrate the technical solutions in the embodiments of the present disclosure, the drawings needed to be used in the description of the embodiments will be briefly introduced below. Obviously, the drawings in the following description are only some embodiments of the present disclosure. For those skilled in the art, other drawings may also be obtained based on these drawings without exerting creative efforts.
FIG. 1 is a schematic structural diagram of a cap assembly in the related art.
FIG. 2 is a schematic structural diagram of a steel shell after rolling according to embodiments of the present disclosure.
FIG. 3 is a schematic structural diagram of a steel shell after forming a buckle edged according to embodiments of the present disclosure.
FIG. 4 is a schematic structural diagram of a cap assembly provided by embodiments of the present disclosure.
FIG. 5 is an enlarged view of point A in FIG. 4.
FIG. 6 is a schematic structural diagram of another cap assembly provided by embodiments of the present disclosure.
FIG. 7 is a schematic diagram of the cooperation between a periphery of a lid and a periphery of an explosion-proof piece according to embodiments of the present disclosure.
FIG. 8 is a schematic structural diagram of an explosion-proof piece provided by embodiments of the present disclosure.
FIG. 9 is a schematic diagram of another cooperation between a periphery of a lid and a periphery of an explosion-proof piece according to embodiments of the present disclosure.
FIG. 10 is a schematic structural diagram of another cap assembly provided by embodiments of the present disclosure.
FIG. 11 is an enlarged view of point B in FIG. 10.
FIG. 12 is a schematic structural diagram of a battery cell provided by embodiments of the present disclosure.
FIG. 13 is a schematic diagram of the cooperation between a cap assembly and a steel shell provided by embodiments of the present disclosure.
FIG. 14 is a comparison chart of the increase in a length of a buckle edge provided by embodiments of the present disclosure.
FIG. 15 is an enlarged view of point C in FIG. 13.

### DETAILED DESCRIPTION

The technical solutions in the embodiments of the present disclosure will be clearly and completely described below with reference to the accompanying drawings in the embodiments of the present disclosure. Obviously, the described embodiments are only some of the embodiments of the present disclosure, rather than all of the embodiments. Based on the embodiments in the present disclosure, all other embodiments obtained by those skilled in the art without making creative efforts fall within the scope of protection of the present disclosure.

In addition, it should be understood that the specific embodiments described here are only used to illustrate and explain the present disclosure, and are not used to limit the present disclosure. In the present disclosure, unless otherwise specified, orientational terms used such as "upper" and "lower" generally refer to the upper and lower position of the device in actual use or working state, specifically the orientation in the drawings; while "inside" and "outside" refer to the outline of the device.

The terms "first" and "second" are used for descriptive purposes only and shall not be understood as indicating or implying relative importance or implicitly indicating the quantity of indicated technical features. Thus, features defined as "first" and "second" may explicitly or implicitly include one or more of the described features. In the description of the present disclosure, "plurality" means two or more than two, unless otherwise explicitly and specifically limited.

In the description of the present disclosure, it should be noted that, unless otherwise clearly stated and limited, the terms "install", "connected", and "connect" should be understood in a broad sense. In some embodiments, the connection may be fixed connection, detachable connection, or integral connection; the connection may be mechanical connection, electrical connection, or mutual communication; the connection may be directly connected, or may be indirectly connected through an intermediary; the connection may be the internal communication between two elements or the interaction between the two elements. For those of ordinary skill in the art, the specific meanings of the above terms in the present disclosure may be understood according to specific circumstances.

The terms "comprise", "comprising" or any other variations thereof are intended to cover a non-exclusive inclusion such that a process, method, article or apparatus including a list of elements includes not only those elements but also other elements those not expressly listed, or includes elements inherent to the process, method, article or equipment. Without further limitation, an element defined by the statement "comprise a..." does not exclude the presence of additional identical elements in a process, method, article, or device that includes the stated element.

In the description of the embodiments of the present disclosure, terms such as "example" or "for example" are used to represent examples, illustrations or descriptions. Any embodiment or design described as "for example" or "such as" in the embodiments of the present disclosure is not to be construed as being more preferred or having more advantages than another embodiment or design. The use of terms such as "example" or "such as" is intended to present relative concepts in a clear manner.

Before introducing the cap assembly, the battery cell, and the battery in the present disclosure, relevant background information of the embodiments of the present disclosure is first introduced.

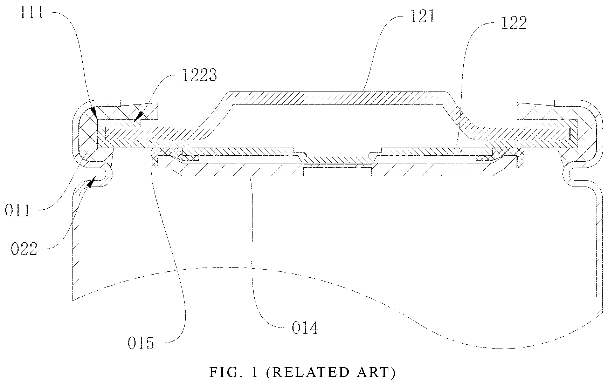

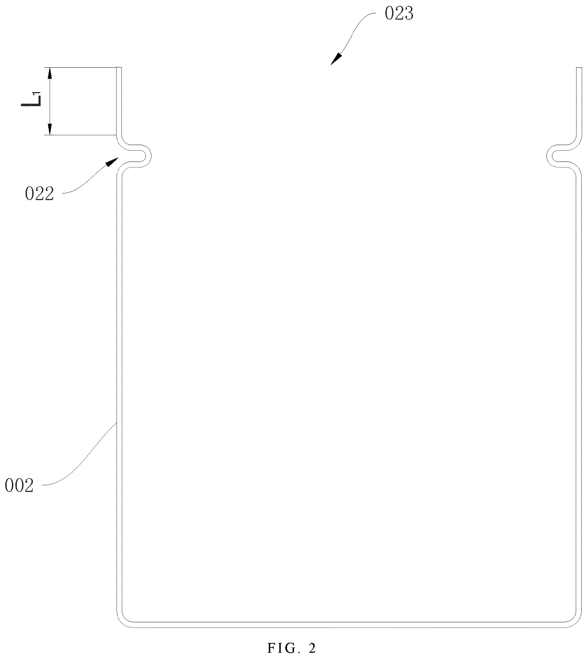

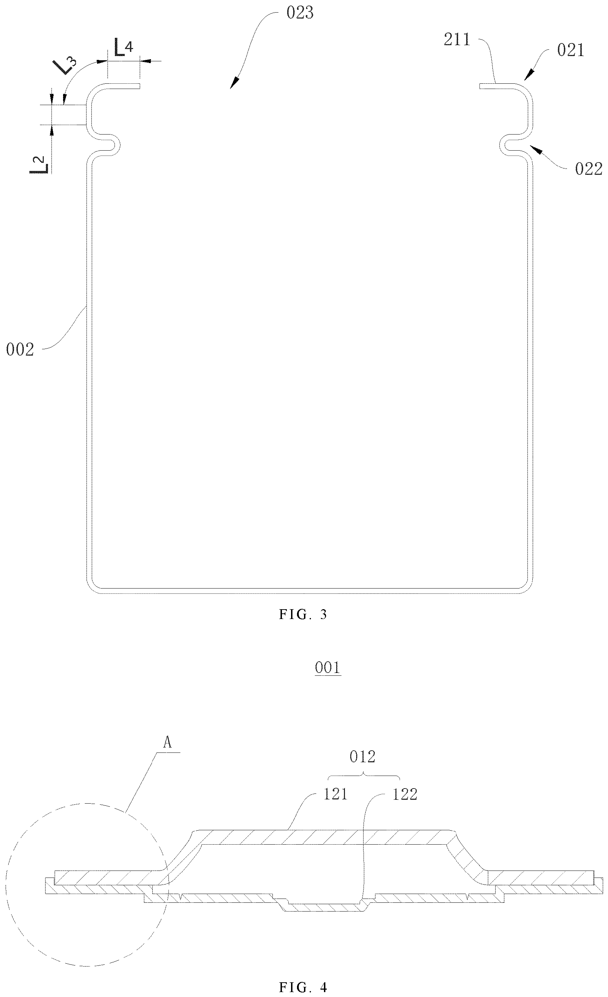

In the related arts, a cap assembly includes a sealing ring and a cap. The cap includes a lid and an explosion-proof piece partially fits the lid. The sealing ring wraps the periphery of the lid and the periphery of the explosion-proof piece. The cap includes an edge covering structure. Specifically, the periphery of the explosion-proof piece is provided with a wrapping edge wrapping the periphery of the lid, as illustrated in FIG. 1, and FIG. 1 is a schematic structural diagram of the cap assembly in the related art. In order to improve the sealing between the cap assembly and the steel shell, after the cap assembly is installed into the steel shell, the steel shell needs to be rolled and sealed in sequence. After rolling, a groove path is formed on a surface of the steel shell, as illustrated in FIG. 2, FIG. 2 is a structural schematic diagram of the steel shell after rolling provided by embodiments of the present disclosure. A distance between an upper edge of the groove path and a tail end of the steel shell is L₁. Sealing is to seal the tail end of the steel shell so that the tail end of the steel shell forms a buckle edge that wraps the sealing ring, as illustrated in FIG. 3, and FIG. 3 is a structural schematic diagram of the steel shell after forming the buckle edge according to embodiments of the present disclosure. In FIG. 3, after sealing, the dimensionL₁ correspondingly changes to a height dimension L₂, a rounded corner dimension L₃, and a length L₄ of a flat section of the buckle edge L₄.

When the buckle edge is used as a negative terminal of the battery cell, the length L₄ of its flat section is too small, and the too small length L₄ is not conducive to the electrical connection between the battery cells. However, simply increasing the dimension of L₁ may lead to increased material costs, changes in mold fixture dimensions, changes in process, etc. Therefore, how to increase the length L₄ of the flat section of the buckle edge without increasing the dimension of L₁ is the purpose of the present disclosure.

Based on this, the present disclosure provides a cap assembly, a battery cell, and a battery described in detail below.

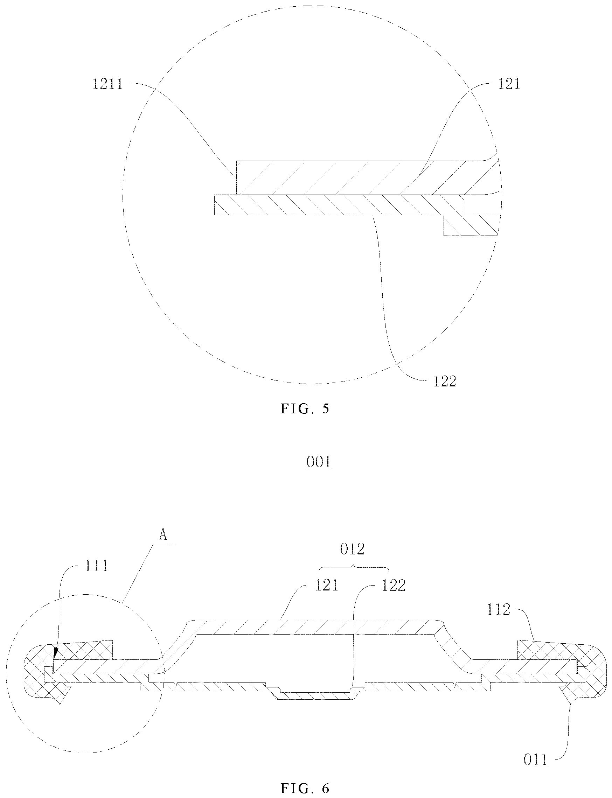

Please refer to FIG. 4, FIG. 4 is a schematic structural diagram of a cap assembly 001 provided by embodiments of the present disclosure. The embodiments of the present disclosure provide the cap assembly 001. The cap assembly 001 includes a cap 012. The cap 012 includes a lid 121 and an explosion-proof piece 122. The lid 121 includes a first side surface and a second side surface arranged oppositely. The explosion-proof piece 122 is partially attached to the first side surface. An edge portion 1222 is provided on the periphery of the explosion-proof piece 122. The edge portion 1222 is disposed on the periphery of the lid, and a plane where a top surface of the edge portion 1222 is located does not exceed a plane where the second side surface is located, as illustrated in FIG. 5, and FIG. 5 is an enlarged view of point A in FIG. 4.

It can be understood that the cap assembly 001 also includes a sealing ring 011. A sealing groove 111 is provided on an inner circumferential surface of the sealing ring 011, and the periphery of the lid 121 and the periphery of the explosion-proof piece 122 are inserted into the sealing groove 111, as illustrated in FIG. 6, and FIG. 6 is a schematic structural diagram of another cap assembly 001 provided by the embodiments of the present disclosure. The sealing ring 011 is insulating. When the cap assembly 001 is applied to a battery cell, the sealing ring 011 insulates the lid 121 and the explosion-proof piece 122 from a steel shell 002 of the battery cell.

The explosion-proof piece 122 is a metal sheet with a weak structure. When a pressure inside the battery cell reaches a threshold, the pressure collapses the weak structure to relieve the pressure in the battery cell. The lid 121 serves as a positive terminal of the battery cell, and the explosion-proof piece 122 is electrically connected to the lid 121 to transmit the current and voltage of the positive terminal of the battery cell to the lid 121.

In addition, groove walls on both sides of the sealing groove 111 are respectively attached to the lid 121 and the explosion-proof piece 122 to form a sealing surface on the lid 121 and the explosion-proof piece 122.

In some embodiments, the sealing ring 011 is an insulating rubber ring resistant to electrolyte corrosion and is only in contact with the periphery of the explosion-proof piece 122 is in contact with the periphery of the lid 121. The explosion-proof piece 122 is a metal sheet provided with multiple notches. A middle portion of the lid 121 protrudes toward one side away from the explosion-proof piece 122 to form a buffer space for high-pressure fluid impact between the lid 121 and the explosion-proof piece 122.

In the embodiments, by limiting that the plane where the edge portion 1222 of the explosion-proof piece 122 is located does not exceed the plane where the second side is located, the cap 012 is provided with a structure without the wrapping edge, thereby reducing a peripheral height of the cap 012 and reducing a total peripheral height of the cap assembly 001. As a result, a height dimension of the steel shell that matches the cap assembly 001 may be reduced, so that the reduced dimension of this part may be increased to a length of a flat section 211 of a buckle edge 021, thereby increasing an electrical connection area between the flat section 211 of the buckle edge 021 and relevant components, and improving the operability and electrical connection stability of the electrical connection between the flat section 211 of the buckle edge 021 and related components.

The height dimension of the steel shell that matches the cap assembly 001 is a dimension L₂ in FIG. 3. In addition, the length L₄ of the flat section 211 satisfies: L₄ ≥ 1 mm.

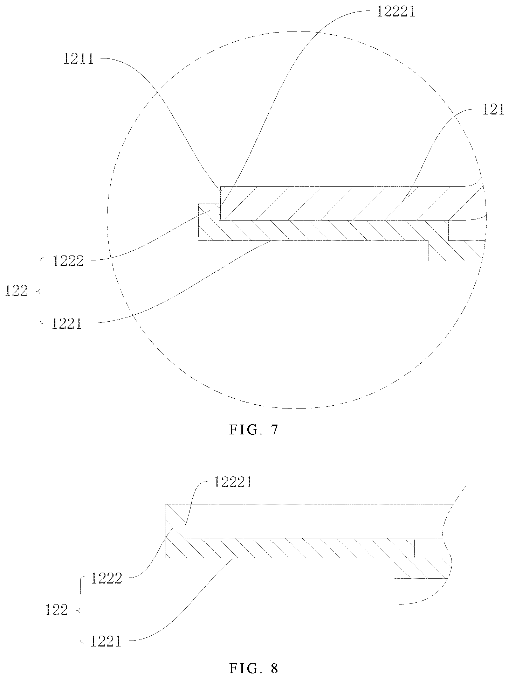

Please refer to FIG. 7, FIG. 7 is a schematic diagram of the cooperation between the periphery of the lid 121 and the periphery of the explosion-proof piece 122 according to embodiments of the present disclosure. In one embodiment, the explosion-proof piece 122 includes a piece body 1221 and a baffle ring disposed on the piece body 1221. The piece body 1221 is partially attached to the first side surface. The edge portion is the baffle ring. One side of the baffle ring is connected to the piece body 1221, the other side of the baffle ring does not exceed the second side surface, and an inner circumferential surface 12221 of the baffle ring is in contact with an outer circumferential surface 1211 of the lid. A structure of the inner circumferential surface 12221 of the baffle ring is illustrated in FIG. 8, and FIG. 8 is a schematic structural diagram of the explosion-proof piece provided by embodiments of the present disclosure.

It can be understood that surfaces of the baffle ring include the inner circumferential surface, an outer circumferential surface, a first end surface connecting one end of the outer circumferential surface and one end of the inner circumferential surface, and a second end surface connecting the other end of the outer circumferential surface and the other end of the inner circumferential surface. The inner circumferential surface and the outer circumferential surface are parallel to an axis of the cap assembly 001, and the first end surface and the second end surface are perpendicular to the axis of the cap assembly 001. The aforementioned one side and the other side of the baffle ring are respectively the first end surface and the second end surface of the baffle ring, and the first end surface is connected to the piece body 1221.

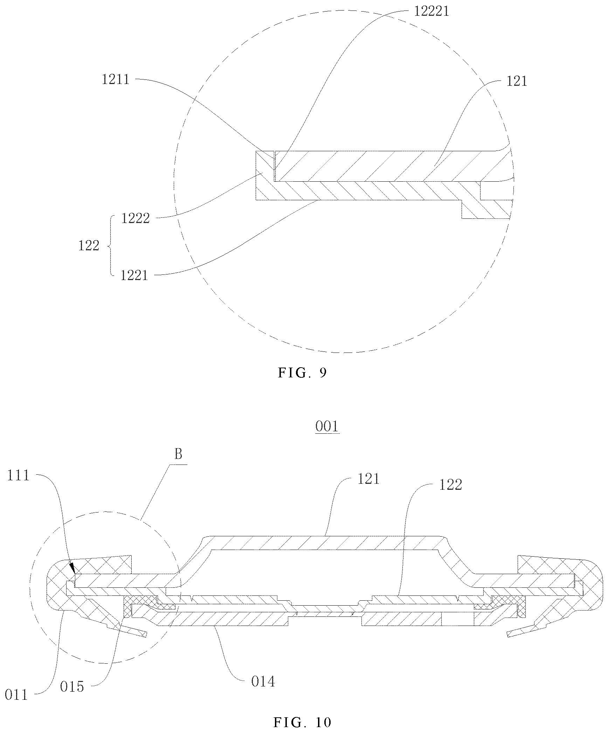

In addition, a maximum height dimension of the baffle ring is that the baffle ring is flush with one side of the periphery of the lid 121 away from the explosion-proof piece 122, as illustrated in FIG. 9, and FIG. 9 is a schematic diagram of another cooperation between the periphery of the lid 121 and the periphery of the explosion-proof piece 122 according to embodiments of the present disclosure.

In some embodiments, the piece body 1221 is integrally formed with the baffle ring. The baffle ring may be formed by punching a metal sheet, or may be formed by rolling a metal sheet. The inner circumferential surface 12221 of the baffle ring abuts against the outer circumferential surface 1211 of the lid, so that the inner circumferential surface 12221 of the baffle ring and the outer circumferential surface 1211 of the lid are in interference fit. Optionally, an interference amount of the interference fit ranges from 0 to 0.5 mm, including but not limited to 0, 0.1 mm, 0.2 mm, 0.3 mm, and 0.5 mm. Therefore, by limiting the interference amount, not only can a gap be avoided from being too large, thereby avoiding insufficient sealing performance, but also an appropriate interference amount can be provided to facilitate the assembly of the lid 121 and the explosion-proof piece 122.

In this embodiment, by abutting the inner circumferential surface 12221 of the baffle ring against the outer circumferential surface 1211 of the lid, a friction force generated by this contact may improve the stability of the fit between the lid 121 and the explosion-proof piece 122, thereby improving the connection reliability between the lid 121 and the explosion-proof piece 122.

Please refer to FIG. 6, in one embodiment, an end surface of the sealing ring 011 located at an end of the lid 121 away from the explosion-proof piece 122 is a slope 112. Along a direction approaching the axis of the sealing ring 011, a distance between the slope 112 and the lid 121 gradually increases.

It can be understood that in order to facilitate electrical connection with relevant components, the flat section 211 of the buckle edge 021 is perpendicular to an axis of the explosion-proof piece 122. Based on this, in this embodiment, by setting the end surface of the sealing ring 011 away from the explosion-proof piece 122 as the slope 112, the end surface of the sealing ring 011 away from the explosion-proof piece 122 can be pressed against the flat section 211 of the buckle edge 021, thereby increasing a pressure between the flat section 211 of the buckle edge 021 and the end surface of the sealing ring 011 facing away from the explosion-proof piece 122, and further improving the sealing between the flat section 211 of the buckle edge 021 and the end surface of the sealing ring 011 facing away from the explosion-proof piece 122.

Please refer to FIG. 10, FIG. 10 is a schematic structural diagram of another cap assembly 001 provided by embodiments of the present disclosure. In one embodiment, the cap assembly 001 further includes an orifice plate 014 and a gasket 015. The orifice plate 014 is located on one side of the explosion-proof piece 122 away from the lid 121. A central portion of the orifice plate 014 is connected to a central portion of the explosion-proof piece 122. The gasket 015 is located at the periphery of the orifice plate 014, and the gasket 015 is disposed between the orifice plate 014 and the explosion-proof piece 122.

It can be understood that the orifice plate 014 may be electrically connected to a positive busbar of the electrode assembly 003.

In some embodiments, the gasket 015 is an annular structure, and the annular structure is coaxially arranged with the sealing ring 011.

In this embodiment, the orifice plate 014 is insulated and supported on one side of the explosion-proof piece 122 through the gasket 015, so that the explosion-proof piece 122 and the orifice plate 014 are interconnected with each other except at the central portions, so that when the central portion of the orifice plate 014 is burst by the high-pressure gas in the battery cell, the electrical connection between the orifice plate 014 and the explosion-proof piece 122 is disconnected, and then the battery cell is disconnected from the circuit to improve the security of the battery cell.

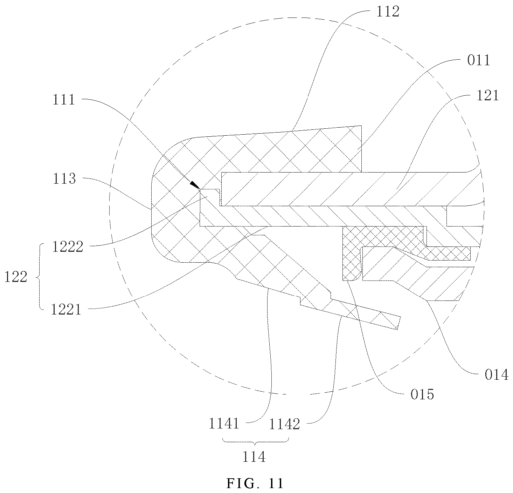

Please refer to FIG. 11, FIG. 11 is an enlarged view of point B in FIG. 10. In one embodiment, the sealing ring 011 includes a main part 113 and a supporting part 114 connected in sequence. The sealing groove 111 is provided on the main part 113. The supporting part 114 is located on one side of the orifice plate 014 away from the lid 121 and is opposite to the periphery of the orifice plate 014 in an axial direction of the sealing ring 011.

In some embodiments, the main part 113 and the supporting part 114 are integrally formed, specifically, may be integrally injection molded.

Since only the central portion of the orifice plate 014 is connected to the central portion of the explosion-proof piece 122, a connection stability between the orifice plate 014 and the explosion-proof piece 122 is poor. Especially when the battery cell vibrates or shakes, the orifice plate 014 is easily separated from the explosion-proof piece 122. Based on this, in this embodiment, the supporting part 114 is provided so that when the rolling groove 022 is processed on the outer circumferential surface of the steel shell 002, an inner wall of the steel shell 002 located between the rolling groove 022 and the sealing ring 011 abuts against the supporting part 114, and pushes the supporting part 114 to move towards the orifice plate 014 and contact the orifice plate 014, so that the orifice plate 014 may be supported and limited by the supporting part 114 to prevent the orifice plate 014 from breaking away from the explosion-proof piece 122, thus improving the structural stability of the cap assembly 001.

Please refer to FIG. 11, in one embodiment, the supporting part 114 is a tapered collar structure. The supporting part 114 has a large diameter end and a small diameter end. The large diameter end is connected to the main part 113. Along the axial direction of the sealing ring 011, the small diameter end is opposite to the periphery of the orifice plate 014.

In this embodiment, by arranging the supporting part 114 into the tapered collar structure, a material consumption may be reduced, and a resistance of the inner wall of the steel shell 002 when pushing the supporting part 114 to move toward the orifice plate 014 may be reduced.

In some embodiments, the supporting part 114 includes a first cone section 1141 and a second cone section 1142. The second cone section 1142 is connected to the main part 113 through the first cone section 1141. When the rolling grooving is processed on an outer wall of the steel shell, the inner wall of the steel shell pushes the supporting part 114 to move toward the orifice plate 014 until the second cone section 1142 contacts the orifice plate 014, the inner circumferential surface of the second cone section 1142 contacts one side of the orifice plate 014 away from the explosion-proof piece 122.

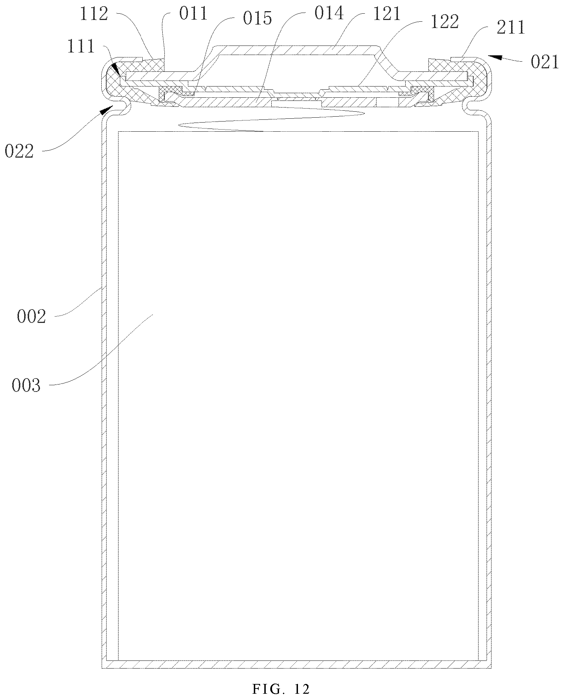

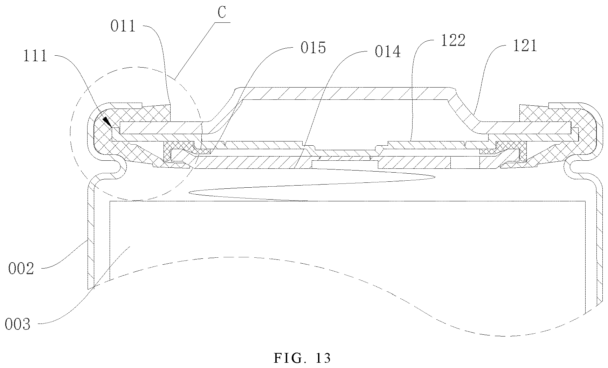

Please refer to FIG. 12, FIG. 12 is a schematic structural diagram of a battery cell provided by embodiments of the present disclosure. The embodiments of the present disclosure provide a battery cell. The battery cell includes the steel shell 002, an electrode assembly 003, and the aforementioned cap assembly 001. The steel shell 002 includes an opening 023. The electrode assembly 003 is disposed in the steel shell 002. The cap assembly 001 blocks the opening 023. An end of the steel shell 002 close to the opening 023 is provided with the buckle edge 021. The buckle edge 021 includes the flat section 211. The flat section 211 is located on one side of the lid 121 away from the explosion-proof piece 122, and the flat section 211 is perpendicular to the axis of the explosion-proof piece 122, as illustrated in FIG. 1, and FIG. 13 is a schematic diagram of the cooperation between the cap assembly 001 and the steel shell 002 provided by embodiments of the present disclosure.

It can be understood that a negative electrode piece of the electrode assembly 003 is electrically connected to the steel shell 002, so that the steel shell 002 is negatively charged. A positive electrode piece of the electrode assembly 003 is electrically connected to the explosion-proof piece 122, specifically through a tab, a current collecting plate, and the orifice plate 014 in sequence, so that the lid 121 is positively charged.

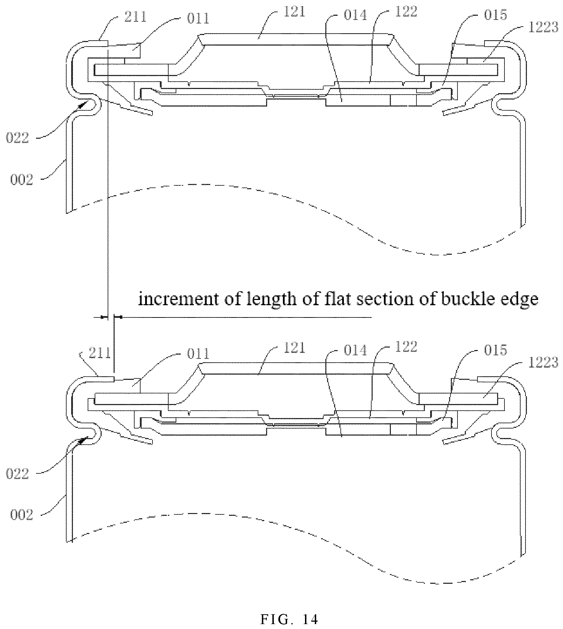

In this embodiment, by using the aforementioned cap assembly, a height dimension of a part of the cap assembly that matches the wrapping edge 1223 is reduced, so that the height dimension of the steel shell that matches the cap assembly 001 may be reduced, and the reduced dimension of this part may be increased to the length of the flat section 211 of the buckle edge 021, thereby increasing the electrical connection area between the flat section 211 of the buckle edge 021 and the relevant components, as illustrated in FIG. 14, and FIG. 14 is a comparison chart of the increase in the length of the buckle edge 021 provided by embodiments of the present disclosure.

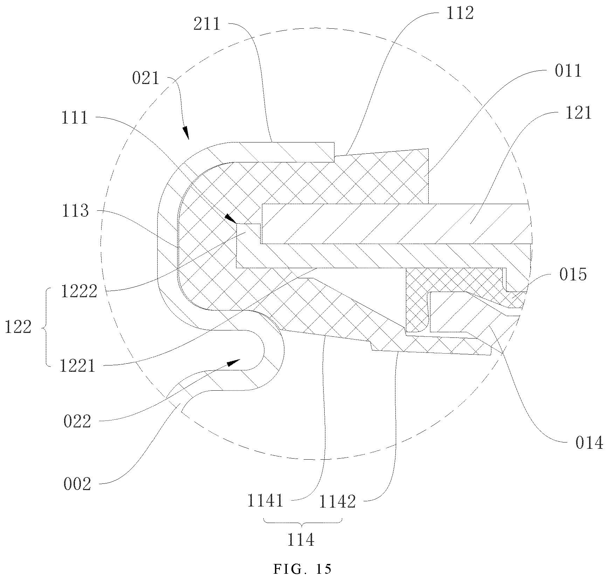

Please refer to FIG. 15, FIG. 15 is an enlarged view of point C in FIG. 13. In one embodiment, the rolling groove 022 is provided on the outer circumferential surface of the steel shell 002, and the inner wall of the steel shell 002 between the rolling groove 022 and the sealing ring 011 abuts against the sealing ring 011.

In this embodiment, by abutting the inner wall of the steel shell 002 between the rolling groove 022 and the sealing ring 011 against the sealing ring 011, the sealing ring 011 is squeezed, thereby increasing the pressure of the sealing surface of the sealing ring 011, and thus improving the sealing between the steel shell 002 and the cap assembly 001.

Embodiments of the present disclosure also provide a battery. The battery pack includes a plurality of the aforementioned battery cells, and the plurality of battery cells are connected in series or in parallel.

It can be understood that when the plurality of battery cells are connected in series, for two adjacent battery cells, the flat section 211 of the buckle edge 021 of one battery cell is electrically connected to the lid 121 of the other battery cell, specifically through a series bar.

The battery disclosed in the embodiments may be applied in, but is not limited to, electric toys, electric tools, ships, aircrafts, vehicles, and other electrical devices. The electric toys may include fixed or mobile electric toys, such as game consoles, electric car toys, electric ship toys, electric airplane toys, etc. the aircrafts may include airplanes, rockets, space shuttles, spaceships, etc. The vehicle may be a fuel vehicle, a gas vehicle or a new energy vehicle, and the new energy vehicle may be a pure electric vehicle, a hybrid vehicle, or an extended-range vehicle, etc. The battery may be placed at a bottom of the vehicle or at a head or tail. The battery may be used as the vehicle's control power supply or as the vehicle's driving power supply.

The embodiments of the present disclosure have been introduced in detail above. Specific examples are used in this paper to illustrate the principles and implementation methods of the present disclosure. The description of the above embodiments is only used to help understand the method of the present disclosure and its core ideas; at the same time, those skilled in the art may make changes in the specific implementation and application scope based on the ideas of the present disclosure. In summary, the contents of this description should not be understood as limiting the present disclosure.

## Claims

1. A cap assembly (001), **characterized by** comprising a cap (012), wherein the cap (012) comprises a lid (121) and an explosion-proof piece (122), the lid (121) comprises a first side surface and a second side surface arranged oppositely, the explosion-proof piece (122) is partially attached to the first side surface, an edge portion (1222) is provided on a periphery of the explosion-proof piece (122), the edge portion (1222) is disposed on a periphery of the lid (121), and a plane where a top surface of the edge portion (1222) is located does not exceed a plane where the second side surface is located.

2. The cap assembly (001) according to claim 1, **characterized in that** the explosion-proof piece (122) comprises a piece body (1221) and a baffle ring disposed on the piece body (1221), the piece body (1221) is partially attached to the first side surface, the edge portion (1222) is the baffle ring, one side of the baffle ring is connected to the piece body (1221), and the other side of the baffle ring does not exceed the second side surface.

3. The cap assembly (001) according to claim 2, **characterized in that** an inner circumferential surface (12221) of the baffle ring abuts against an outer circumferential surface of the lid (121).

4. The cap assembly (001) according to claim 3, **characterized in that** the inner circumferential surface (12221) of the baffle ring and the outer circumferential surface of the lid (121) are in interference fit, and an interference amount of the interference fit ranges from 0 to 0.5 mm.

5. The cap assembly (001) according to claim 2, wherein the other side of the baffle ring is flush with one side of the periphery of the lid (121) away from the explosion-proof piece (122); or
the other side of the baffle ring is located between both sides of the periphery of the lid (121) facing and facing away from the explosion-proof piece (122).

6. The cap assembly (001) according to claim 2, **characterized in that** the piece body (1221) is integrally formed with the baffle ring.

7. The cap assembly (001) according to any one of claim 1 to claim 6, **characterized in that** the cap assembly (001) further comprises an orifice plate (014) and a gasket (015), the orifice plate (014) is located on one side of the explosion-proof piece (122) away from the lid (121), a central portion of the orifice plate (014) is connected to a central portion of the explosion-proof piece (122), the gasket (015) is located at a periphery of the orifice plate (014), and the gasket (015) is disposed between the orifice plate (014) and the explosion-proof piece (122).

8. The cap assembly (001) according to claim 7, **characterized in that** the explosion-proof piece (122) and the orifice plate (014) are interconnected with each other except at the central portions.

9. The cap assembly (001) according to claim 7, **characterized in that** the cap assembly (001) further comprises a sealing ring (011), an inner circumferential surface of the sealing ring (011) is provided with a sealing groove (111), and the periphery of the lid (121) and the periphery of the explosion-proof piece (122) are inserted into the sealing groove (111).

10. The cap assembly (001) according to claim 9, **characterized in that** the sealing ring (011) comprises a main part (113) and a supporting part (114) connected in sequence, the sealing groove (111) is provided on the main part (113), the supporting part (114) is located on one side of the orifice plate (014) away from the lid (121) and is opposite to the periphery of the orifice plate (014) in an axial direction of the sealing ring (011).

11. The cap assembly (001) according to claim 10, **characterized in that** the supporting part (114) is a tapered collar structure, the supporting part (114) has a large diameter end and a small diameter end, the large diameter end is connected to the main part (113), and the small diameter end is opposite to the periphery of the orifice plate (014) in the axial direction of the sealing ring (011).

12. The cap assembly (001) according to claim 11, wherein the supporting part (114) comprises a first cone section (1141) and a second cone section (1142), the second cone section (1142) is connected to the main part (113) through the first cone section (1141), and an inner circumferential surface of the second cone section (1142) contacts one side of the orifice plate (014) away from the explosion-proof piece (122).

13. A battery cell, **characterized by** comprising:
a steel shell (002), comprising an opening (023);
an electrode assembly (003), disposed in the steel shell (002);
the cap assembly (001) of any one of claim 1 to claim 12, blocking the opening (023);
wherein an end of the steel shell (002) close to the opening (023) is provided with a buckle edge (021), the buckle edge (021) comprises a flat section (211), the flat section (211) is located on one side of the lid (121) away from the explosion-proof piece (122), and the flat section (211) is perpendicular to an axis of the explosion-proof piece (122).

14. The battery cell according to claim 13, **characterized in that** a rolling groove (022) is provided on an outer circumferential surface of the steel shell (002).

15. A battery, **characterized by** comprising a plurality of battery cells of claim 13 or claim 14, wherein the plurality of battery cells are connected in series or in parallel.
